# EUROPEAN PATENT SPECIFICATION

(11) **EP 3 015 204 B1**
(45) Date of publication and mention of the grant of the patent: **19.07.2017**
(21) Application number: 15190453.9
(22) Date of filing: 19.10.2015
(51) Int. Cl.: B23C 3/00, B23B 35/00, B23P 15/00, F16C 7/02

(54) **PRODUCTION METHOD FOR TITANIUM-ALLOY CONNECTING ROD**
HERSTELLUNGSVERFAHREN FÜR TITANLEGIERUNGS-PLEUELSTANGE
PROCÉDÉ DE PRODUCTION D'UNE BIELLE EN ALLIAGE DE TITANE

(30) Priority: 28.10.2014 JP 2014219579
(43) Date of publication of application: 04.05.2016
(73) Proprietor: Yamaha Hatsudoki Kabushiki Kaisha, Shizuoka-ken Shizuoka 438-8501 (JP)
(72) Inventor: Miura, Tetsu, Shizuoka-ken, Shizuoka 438-8501 (JP); Kojima, Yuuki, Shizuoka-ken, Shizuoka 438-8501 (JP)
(74) Representative: Moreland, David

(56) References cited:
- EP-A1- 2 647 854
- JP-A- 2007 003 000
- JP-U- S 644 916
- JP-U- H0 288 016
- JP-U- H01 145 914
- JP-U- S60 114 316
- US-A1- 2014 174 400

## Description

### FIELD OF INVENTION

The present invention relates to a production method for a titanium-alloy connecting rod, e.g. an engine connecting rod, according to the preamble of claim 1. An example of such a method is disclosed in JP 2007 003000 A.

### BACKGROUND TO INVENTION

Conventionally, steels have widely been used as the material of connecting rods (also known as "con-rods") of internal combustion engines. In recent years, use of a titanium alloy has been proposed in order to reduce the weight of a connecting rod (see e.g. JP 2007 003000 A). Titanium alloys are harder to cut than steels, and create a high cutting resistance. Therefore, it would be desirable for any cutting tool that is used in producing a titanium-alloy connecting rod to have a high rigidity.

An object of the present invention is to provide a production method for a titanium-alloy connecting rod that ensures high rigidity of a cutting tool.

It is an object of at least one embodiment of at least one aspect of the present invention to obviate or at least mitigate one or more problems or disadvantages in the prior art.

### SUMMARY OF INVENTION

The present invention is defined in the independent claim. Some preferred features are defined in the dependent claims. According to an aspect of the present invention there is provided a production method for a titanium-alloy connecting rod, in which a rod portion and a cap portion of a big end are fixed by using a fixing member or bolt,
the production method comprising a step of forming a fixing hole or bolt hole for the fixing member or bolt to extend therethrough,
the step of forming the fixing hole or bolt hole comprising:
forming a first hole in the cap portion and the rod portion in a direction from the cap portion toward the rod portion; and
forming a second hole in the rod portion in a direction from the rod portion toward the cap portion, wherein,
the first hole and the second hole communicate with each other once the first and second holes are formed; and
a longitudinal (or cutting) direction of a cutting tool used for forming the second hole is inclined with respect to a longitudinal direction (y) of the rod main body of the titanium-alloy connecting rod.

An angle between the longitudinal or cutting direction of the cutting tool and the longitudinal direction of the rod main body, e.g. whilst forming the second hole, may be not less than 2 degrees and may not be more than 20 degrees.

The angle between the longitudinal or cutting direction of the cutting tool and the longitudinal direction of the rod main body, e.g. whilst forming the second hole, may be not less than 3 degrees and may not be more than 10 degrees.

The titanium alloy may be an alloy comprising at least titanium and aluminium and/or iron, such as Ti-5AI-1Fe alloy.

With the production method for a titanium-alloy connecting rod, according to the invention, when forming the second hole in a direction from the rod portion toward the cap portion, the longitudinal direction of the cutting tool may be inclined with respect to the longitudinal direction of the rod main body. This may allow the cutting tool to have a large diameter, whereby the rigidity of the cutting tool may be enhanced.

By ensuring high rigidity of the cutting tool, the processing time may be reduced, and the precision of processing may be enhanced. Moreover, the lifetime of the cutting tool may be extended. In a production method for a titanium-alloy connecting rod according to the first aspect, the thickness of the big end of the connecting rod may be increased, whereby the big end rigidity may be enhanced. For example, the angle between the longitudinal direction of the cutting tool and the longitudinal direction of the rod main body may be not less than 2 degrees and may not be more than 20 degrees. More preferably, the angle between the longitudinal direction of the cutting tool and the longitudinal direction of the rod main body may be not less than 3 degrees and may not be more than 10 degrees.

The titanium alloy may comprise titanium and aluminium and/or iron, such as Ti-5AI-1Fe alloy. Ti-5Al-1Fe alloy may excel in the balance between processibility and strength.

A titanium-alloy connecting rod may be produced by the above production method. By using the above production method, it may become possible to increase the thickness of the big end of the connecting rod, whereby a titanium-alloy connecting rod with high rigidity may be obtained.

With the titanium-alloy connecting rod the depth direction of at least a portion of the bolt hole that lies in the rod portion may be inclined with respect to the longitudinal direction of the rod main body. This may allow the thickness of the big end to be increased, whereby the big end rigidity may be enhanced. For example, the angle between the depth direction of at least a portion of the bolt hole that lies in the rod portion and the longitudinal direction of the rod main body may be not less than 2 degrees and may not be more than 20 degrees. More preferably, the angle between the depth direction of at least a portion of the bolt hole that lies in the rod portion and the longitudinal direction of the rod main body may be not less than 3 degrees and may not be more than 10 degrees.

The titanium-alloy connecting rod may be light-weight and may have a high strength, and therefore may suitably be used in various internal combustion engines (engines) for automotive vehicles and other mechanical applications.

With a production method for a titanium-alloy connecting rod according to the invention when forming a bolt hole in a direction from the rod portion toward the cap portion of the big end, the longitudinal direction of the cutting tool may be inclined with respect to the longitudinal direction of the rod main body. This may allow the cutting tool to have a large diameter, whereby the rigidity of the cutting tool may be enhanced. Because high rigidity of the cutting tool is ensured, the processing time can be shortened, and the precision of processing may be enhanced. Moreover, the lifetime of the cutting tool may be extended. With the above production method for a titanium-alloy connecting rod, the thickness of the big end of the connecting rod may be increased, whereby the big end rigidity may be enhanced.

With a titanium-alloy connecting rod as described above, the depth direction of at least a portion of the bolt hole that lies in the rod portion may be inclined with respect to the longitudinal direction of the rod main body. This may allow the thickness of the big end to be increased, whereby the big end rigidity may be enhanced.

These general and specific aspects may be implemented using a system, a method, and a computer program, and any combination of systems, methods, and computer programs.

Additional benefits and advantages of the disclosed embodiments will be apparent from the specification and Figures. The benefits and/or advantages may be individually provided by the various embodiments and features of the specification and drawings disclosure, and need not all be provided in order to obtain one or more of the same.

### BRIEF DESCRIPTION OF DRAWINGS

An embodiment of the present invention will now be described, by way of example only, with reference to the accompanying drawings, which are:
- **Figures 1A and 1B**: diagrams showing a titanium-alloy connecting rod.

- **Figure 2**: a flowchart showing a production method for a titanium-alloy connecting rod according to an embodiment of the present invention.
- **Figure 3**: a diagram showing steps of forming a first hole according to an embodiment of the present invention.
- **Figure 4**: a diagram showing steps of forming a second hole.

- **Figure 5**: a diagram showing steps of forming a second hole according to an embodiment of the present invention.
- **Figure 6**: a diagram showing a titanium-alloy connecting rod.

- **Figure 7**: a diagram showing a titanium-alloy connecting rod.
- **Figure 8**: a diagram showing a titanium-alloy connecting rod.

- **Figure 9**: a diagram showing an internal combustion engine.

- **Figure 10**: a diagram showing a motorcycle.

### DETAILED DESCRIPTION OF DRAWINGS

Hereinafter, with reference to the attached drawings, embodiments of the present invention will be described. The present invention is not limited to the following embodiments.

In the description of the embodiments, like component elements will be denoted by like reference numerals, and any overlapping description may be omitted.

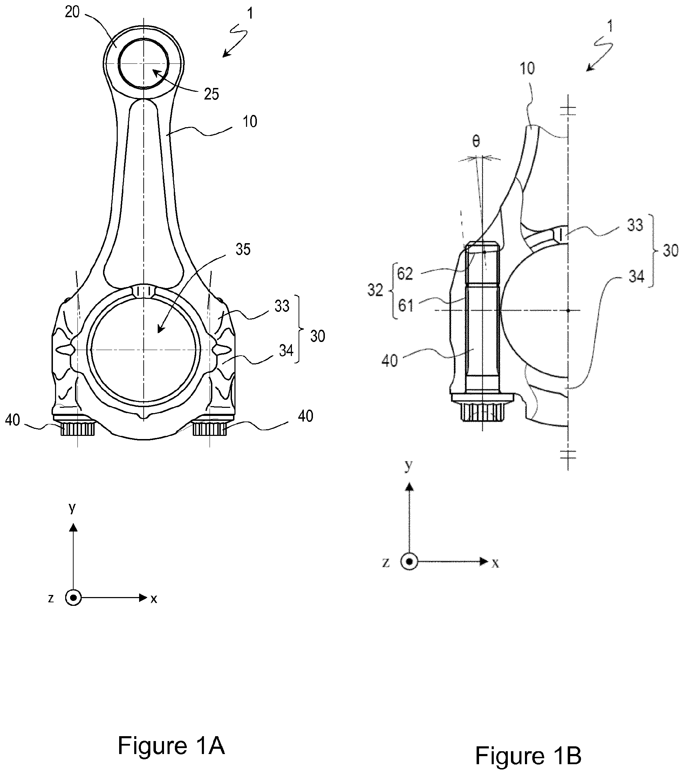

Figure 1 shows a titanium-alloy connecting rod 1. Figure 1A is a plan view showing the entire titanium-alloy connecting rod 1, and Figure 1B is a partial plan view showing the neighborhood of a big end 30 of the titanium-alloy connecting rod 1.

The titanium-alloy connecting rod 1 is made of a titanium alloy. For example, Ti-5Al-1Fe alloy can be used as the titanium alloy. Ti-5Al-1Fe alloy is a titanium alloy containing about 5 mass% of Al and about 1 mass% of Fe, and excels in the balance between processibility and strength. It will be appreciated that the material of the titanium-alloy connecting rod 1 is not limited to Ti-5AI-1Fe alloy, but titanium alloys of various known compositions (e.g. an alloy of or comprising titanium and aluminium and/or vanadium, such as Ti-6Al-4V alloy i.e. having substantially 6 mass % aluminium and substantially 4 mass % vanadium) can be used.

As shown in Figure 1A, the titanium-alloy connecting rod 1 includes a bar-like rod main body 10, with a small end 20 being provided at one end of the rod main body 10, and a big end 30 provided at another end of the rod main body 10.

The small end 20 has a throughhole (called a "piston pin hole") 25 for allowing a piston pin to extend therethrough. The big end 30 has a throughhole (called a "crankpin hole") 35 for allowing a crankpin to extend therethrough.

The direction in which the rod main body 10 extends (the y direction in the figure) will be referred to as "the longitudinal direction of the rod main body", and the direction of a center axis (the z direction in the figure) of the piston pin hole 25 and the crankpin hole 35 will be referred to as the "axial direction". The direction which is orthogonal to the longitudinal direction and the axial direction (the x direction in the figure) will be referred to as the "width direction".

A rod portion 33 defining a portion of the big end 30 is formed at the end of the rod main body 10, such that the big end 30 includes the rod portion 33 and a cap portion 34 coupled to the rod portion 33. In other words, the titanium-alloy connecting rod 1 is a split-type connecting rod. The split-type connecting rod 1 is formed by a fracture technique, for example. The fracture technique is a technique of integrally forming a big end 30 and then splitting the big end 30 into a rod portion 33 and a cap portion 34 via brittle fracture. The split-type connecting rod 1 may also be formed by other techniques; for example, the big end 30 may be integrally formed and then cut up via machining.

The titanium-alloy connecting rod 1 further includes bolts 40 for fixing the cap portion 34 to the rod portion 33. The big end 30 has bolt holes 32 through which the bolts 40 are allowed to extend. As the bolts 40 are screwed into the bolt holes 32, the rod portion 33 and the cap portion 34 become fixed to each other. In other words, the rod main body 10 and the cap portion 34 being fixed together form the circular shape of the big end 30.

Each bolt hole 32 is composed of a first hole 61, which is cut in a direction from the cap portion 34 toward the rod portion 33, and a second hole 62, which is cut in a direction from the rod portion 33 toward the cap portion 34, the first and second holes 61 and 62 communicating with each other. By forming such a second hole 62, it becomes possible to disperse the stress acting on the internal thread of the bolt holes 32, and reduce stress concentration on any specific portion of the internal thread.

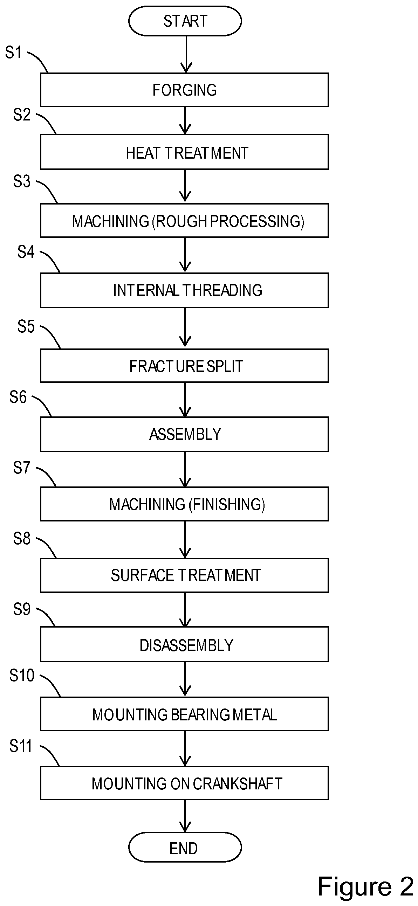

A production method for the titanium-alloy connecting rod 1 will be described. Figure 2 is a flowchart showing a production method for the titanium-alloy connecting rod 1 according to the present embodiment.

A blank connecting rod 1 having the rod main body 10, the small end 20, and the big end 30 is formed through forging using a titanium alloy (step S1). Note that the blank connecting rod 1 may be subjected to shot peening. Shot peening removes any α case occurring at the surface of the titanium alloy. α case is an oxygen-concentrated layer which affects processibility, ductility, fatigue characteristics, and so on, and therefore is preferably removed. Shot peening can also introduce residual stress to the connecting rod 1, thereby enhancing the strength of the connecting rod 1.

Next, the blank connecting rod 1 is subjected to a heat treatment (step S2). For example, an annealing treatment, a solution treatment, and an aging treatment are performed.

Next, the blank connecting rod 1 is machined (rough processing) (step S3). During the machining (rough processing), the face of the connecting rod 1 extending in the thickness direction (the xy plane) is processed, and then a cutting is performed to form the piston pin hole 25 and the crankpin hole 35 in the small end 20 and the big end 30. Next, the bolt holes 32 are formed. The detailed method of forming the bolt holes 32 will be described later. Next, a fracture beginning trench or notch is formed in the crankpin hole 35 of the big end 30 by a method such as wire-cut electro-discharge machining. Note that the order of such machining processes is not limited to the above, and they may be performed in any arbitrary order.

Next, internal threading is provided on the bolt holes 32 of the big end 30 (step S4).

Next, the big end 30 of the connecting rod 1 is fracture-split into the rod portion 33 and the cap portion 34 (step S5). For example, sliders capable of moving along the y direction may be inserted in the crankpin hole 35, and a wedge may be driven in between the sliders, whereby the big end 30 of the connecting rod 1 becomes fracture-split into the rod portion 33 and the cap portion 34, beginning from the fracture beginning trench or notch.

Note that, before performing the step of fracture-splitting the big end 30, the big end 30 may be cooled below a predetermined temperature (e.g. about -40°C or below) in advance. The cooling of the big end 30 can be performed by soaking the connecting rod 1 into liquid nitrogen, for example. By performing such a cooling step before the fracture split step, the fracture split of the titanium-alloy connecting rod 1 can be facilitated.

Next, bolts 40 are inserted in the bolt holes 32 while keeping the fractured surface of the rod portion 33 and the fractured surface of the cap portion 34 in contact and the rod portion 33 and the cap portion 34 are assembled in place (step S6).

Next, the inner peripheral surfaces of the piston pin hole 25 and the crankpin hole 35 of the assembled connecting rod 1 are subjected to finishing (step S7). Then a surface treatment is applied to the connecting rod 1 (step S8). The surface treatment is conducted by, for example, coating the surface of the connecting rod 1 with chromium nitride by a PVD technique. Alternatively, the surface treatment may precede the finishing (step S7).

In this manner, the titanium-alloy connecting rod 1 is produced.

When the titanium-alloy connecting rod 1 is to be mounted onto the crankpin of the crankshaft, the bolts 40 are removed from the big end 30 of the connecting rod 1, whereby the rod portion 33 and the cap portion 34 are disassembled (step S9). Next, a bearing metal is mounted on each of the rod portion 33 and the cap portion 34 (step S10). Then, while sandwiching the crankpin of the crankshaft between the rod portion 33 and the cap portion 34, the rod portion 33 and the cap portion 34 are fixed with the bolts 40, whereby the titanium-alloy connecting rod 1 becomes mounted to the crankpin of the crankshaft (step S11).

Next, the method of forming the bolt holes 32 will be described in more detail.

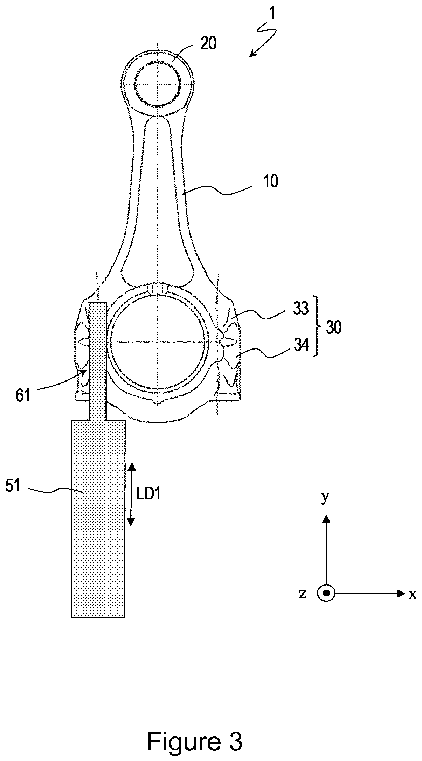

As is described with reference to Figure 1B, each bolt hole 32 is formed by allowing a first hole 61 and a second hole 62 to communicate (i.e. become as one). Figure 3 is a diagram showing a step of forming a first hole 61 in the cap portion 34 and the rod portion 33, in a direction from the cap portion 34 toward the rod portion 33, e.g. through the cap portion 34 and then into the rod portion 33. In this example, the first hole 61 is formed by using a cutting tool 51. As the cutting tool 51, a drill, an end mill, or the like can be used, for example. While keeping the longitudinal or cutting direction LD1 of the cutting tool 51 in parallel to the longitudinal direction of the rod main body 10 (i.e., the y direction), the cap portion 34 and the rod portion 33 are subjected to cutting, thereby forming the first hole 61.

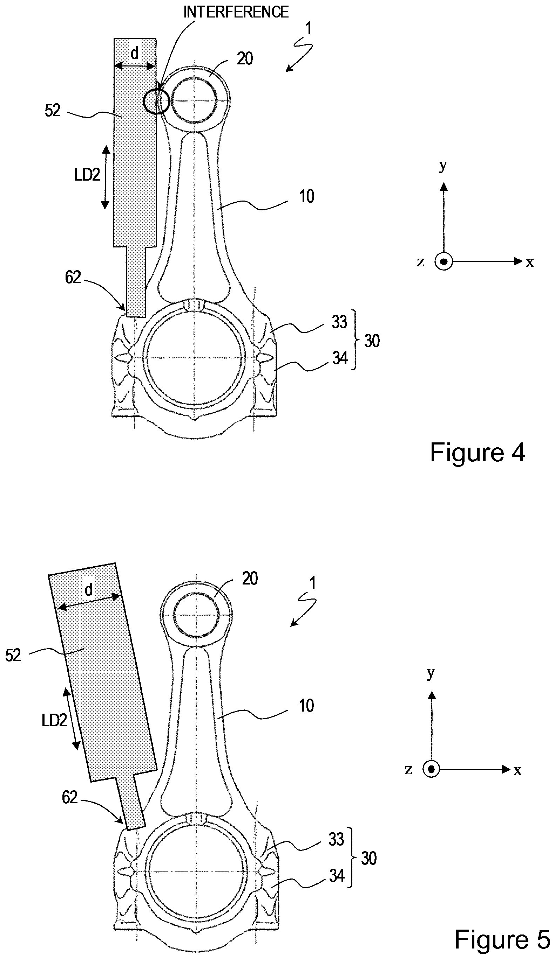

Next, the second hole 62 is formed. Figure 4 is a diagram showing a step of forming a second hole 62 in the rod portion 33, in a direction from the rod portion 33 toward the cap portion 34. In this example, the second hole 62 is formed by using a cutting tool 52. As the cutting tool 52, a drill, an end mill, or the like can be used, for example.

In the example shown in Figure 4, while keeping the longitudinal or cutting direction LD2 of the cutting tool 52 in parallel to the longitudinal direction of the rod main body 10 (i.e., the y direction), the rod portion 33 is subjected to cutting, thereby forming the second hole 62. As the first hole 61 and the second hole 62 communicate with each other, each bolt hole 32 is completed (Figure 1 B).

Now, the size of the small end 20 of the titanium-alloy connecting rod 1 will be discussed. Generally speaking, steels are widely used as connecting rod materials. If similar levels of rigidity and strength to those of the small end of a steel connecting rod were to be realized in the small end 20 of the titanium-alloy connecting rod 1, the small end 20 of the titanium-alloy connecting rod 1 would have to increase in thickness, thus resulting in an increased size of the outer periphery of the small end 20. The increased size of the small end 20 would allow the cutting tool 52 to interfere with the small end 20 when forming the second hole 62. Such interference can be avoided by using a cutting tool 52 with a small diameter d to form the second hole 62.

However, a cutting tool 52 having a small diameter d might have a low rigidity. Titanium alloy is harder to cut than steel, and creates a high cutting resistance. Therefore, if the rigidity of the cutting tool 52 is low, processing may take time, and/or it may be difficult to ensure precision of processing. There is also a problem of shortened lifetime of the cutting tool 52.

As shown in Figure 3, when forming the first hole 61 in a direction from the cap portion 34 toward the rod portion 33, there is no member that interferes with the cutting tool 51. This allows the cutting tool 51 to have a large diameter, so that the cutting tool 51 can have a high rigidity. On the other hand, the aforementioned problem has never been an issue with steel connecting rods because steels are relatively easy to process, and the small size of the small end of the steel connecting rod allows use of a cutting tool that has a large rod diameter and hence a large rigidity.

The inventors have conducted studies on a cutting method for the titanium-alloy connecting rod 1. As a result of the studies, the inventors have arrived at a cutting method for the titanium-alloy connecting rod 1 that ensures high rigidity of the cutting tool 52. With reference to Figure 5, a cutting method for the titanium-alloy connecting rod 1 that ensures high rigidity of the cutting tool 52 will be described.

Figure 5 is a diagram showing a step of forming a second hole 62 in the rod portion 33 in a direction from the rod portion 33 toward the cap portion 34, by using a cutting tool 52 having a high diameter d and a high rigidity. In the cutting method illustrated in Figure 5, when forming the second hole 62 in a direction from the rod portion 33 toward the cap portion 34 (e.g. through the rod portion 33 towards the cap portion 34), the longitudinal or cutting direction LD2 of the cutting tool 52 is inclined with respect to the longitudinal direction of the rod main body 10 (i.e., the y direction). As a result, interference between the cutting tool 52 and the small end 20 is avoided, and the diameter d of the cutting tool 52 can be increased, thereby enhancing the rigidity of the cutting tool 52. Because high rigidity of the cutting tool 52 is ensured, the processing time can be shortened, and the precision of processing can be enhanced. Moreover, the lifetime of the cutting tool 52 can be extended.

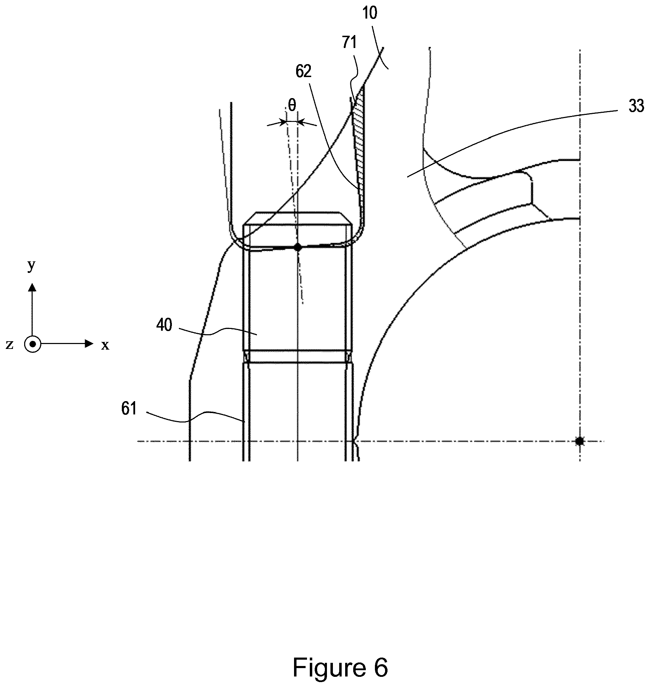

Figure 6 is a diagram showing a second hole 62 which is formed by the cutting method illustrated in Figure 5. The thickness of the rod portion 33 can be increased due to the hatched region 71 as compared to the case shown in Figure 4, where the second hole 62 is formed while keeping the longitudinal direction LD2 of the cutting tool 52 in parallel to the longitudinal direction of the rod main body 10 (i.e., the y direction). Thus, the cutting method illustrated in Figure 5 allows the big end 30 to have a high rigidity.

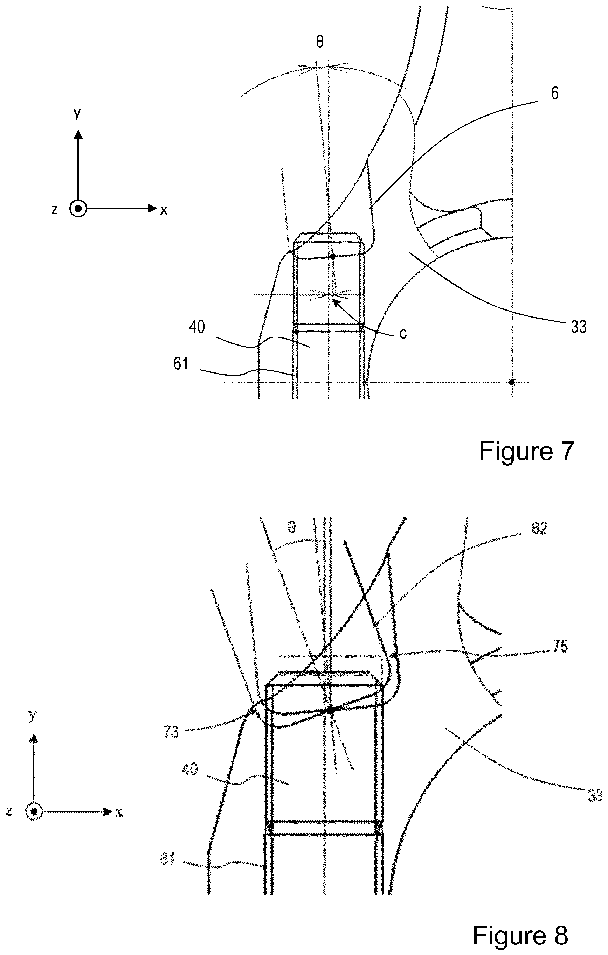

Moreover, as shown in Figure 7, the center of the bottom of the second hole 62 may be offset from the center axis of each bolt 40 by a distance c, which makes it easier to maintain the clearance between the tip of the bolt 40 and the connecting rod 1 and the clearance between the tip of the tap used in the internal threading and the connecting rod 1. For example, when bolts 40 with a diameter of 9 mm are used, the aforementioned clearances can be easily maintained by offsetting the center of the bottom of the second hole 62 from the center axis of each bolt 40 by 5 mm. In this case, for example, the second hole 62 is to be formed by setting the angle θ between the longitudinal or cutting direction LD2 of the cutting tool 52 and the longitudinal direction of the rod main body 10 (i.e., the y direction) at 5 degrees ±1 degree.

Next, with reference to Figure 8, the angle θ between the longitudinal or cutting direction LD2 of the cutting tool 52 and the longitudinal direction of the rod main body 10 (i.e., the y direction) will be discussed.

If the angle θ is too large, the wall 75 of the resultant second hole 62 and the tip of the bolt 40 may interfere, and the wall 75 of the second hole 62 and the tip of the tap used in the internal threading may also interfere. Moreover, as a region 73 becomes removed, the meshing length of the bolt will decrease. On the other hand, if the angle θ is too small, the cutting tool 52 and the small end 20 may interfere. With these in mind, the inventors continued their studies, thereby finding that the angle θ is preferably not less than 2 degrees and not more than 20 degrees. It was found more preferable that the angle θ is not less than 3 degrees and not more than 10 degrees. By forming the second hole 62 with the cutting tool 52 being inclined in such angle ranges, the aforementioned problems can be alleviated.

Since the depth direction of at least a portion of each bolt hole 32 that lies in the rod portion 33 of the titanium-alloy connecting rod 1 thus produced (i.e., the depth direction of the second hole 62) is inclined with respect to the longitudinal direction of the rod main body 10, the thickness of the big end 30 can be increased so that a titanium-alloy connecting rod 1 with a high rigidity is realized. The depth direction of the second hole 62 is parallel to the longitudinal or cutting direction LD2 of the cutting tool 52, and the angle θ between the depth direction of the second hole 62 and the longitudinal direction of the rod main body 10 is preferably not less than 2 degrees and not more than 20 degrees, as has been described above. The angle θ is more preferably not less than 3 degrees and not more than 10 degrees.

Although the above description illustrates that the second hole 62 is formed after the first hole 61 is formed, the order of forming these holes may be reversed, in which case similar effects to the above can also be obtained.

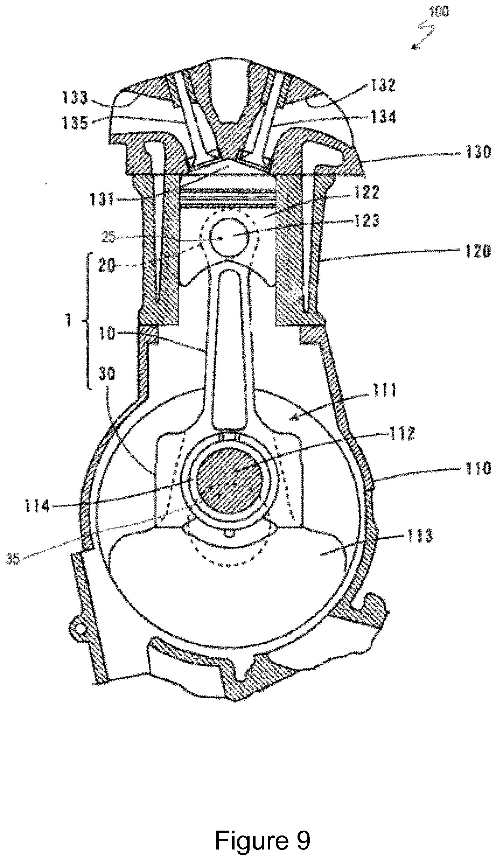

The titanium-alloy connecting rod 1 produced by the production method of the present embodiment as described above can be widely used in various internal combustion engines (engines) for automotive vehicles and other mechanical applications. Figure 9 is a diagram showing an engine 100 including the titanium-alloy connecting rod 1 having been produced by the production method of the present embodiment.

The engine 100 includes a crankcase 110, a cylinder block 120, and a cylinder head 130.

A crankshaft 111 is accommodated in the crankcase 110. The crankshaft 111 has a crankpin 112 and a crank arm 113.

A cylinder block 120 is provided above the crankcase 110. A piston 122 is allowed to reciprocate inside the cylinder bore.

A cylinder head 130 is provided above the cylinder block 120. In conjunction with the cylinder block 120 and the piston 122, the cylinder head 130 defines a combustion chamber 131. An intake valve 134 for supplying vapor to the interior of the combustion chamber 131 is provided within the intake port 132, and an exhaust valve 135 for enabling evacuation of the combustion chamber 131 is provided within the exhaust port 133.

The piston 122 and the crankshaft 111 are linked via the titanium-alloy connecting rod 1. Specifically, a piston pin 123 of the piston 122 is inserted in the piston pin hole 25 of the small end 20 of the connecting rod 1, and the crankpin 112 of the crankshaft 111 is inserted in the crankpin hole 35 of the big end 30, thus linking the piston 122 and the crankshaft 111 together. A bearing metal 114 is provided between the inner peripheral surface of the big end 30 and the crankpin 112. A bushing may be provided between the inner peripheral surface of the small end 20 and the piston pin 123.

The piston pin 123 preferably has a diamond-like carbon film on its surface. The diamond-like carbon film provided on the surface of the piston pin 123 will make for lower friction, and thus enhanced performance and extended mileage of the engine 100.

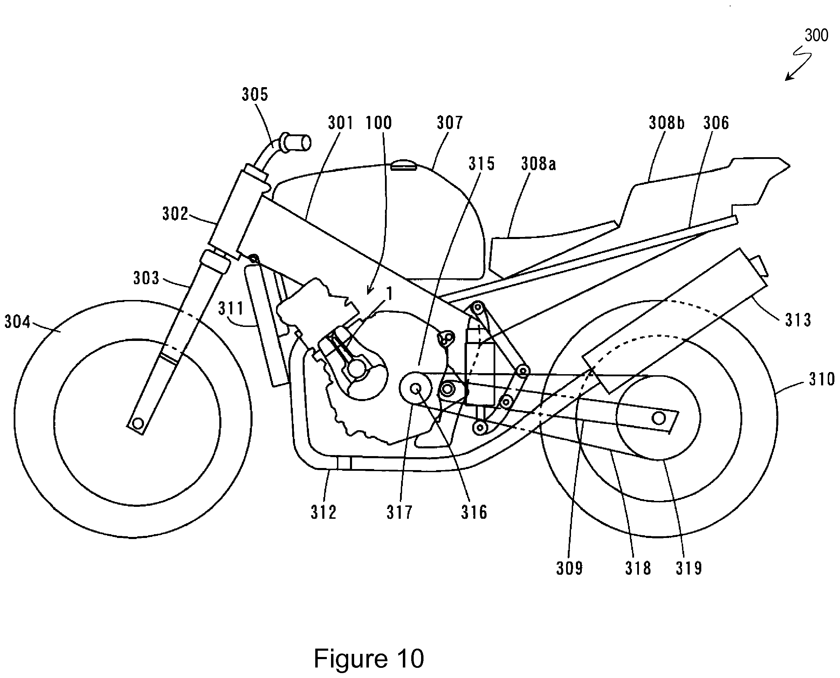

Figure 10 shows a motorcycle 300 which incorporates the engine 100 shown in Figure 9. In the motorcycle 300 shown in Figure 10, a head pipe 302 is provided at the front end of a body frame 301. To the head pipe 302, front forks 303 are attached so as to be capable of swinging in the right-left direction of the vehicle. At the lower end of the front forks 303, a front wheel 304 is supported so as to be capable of rotating.

A seat rail 306 is attached at an upper portion of the rear end of the body frame 301 so as to extend in the rear direction. A fuel tank 307 is provided on the body frame 301, and a main seat 308a and a tandem seat 308b are provided on the seat rail 306.

Rear arms 309 extending in the rear direction are attached to the rear end of the body frame 301. At the rear end of the rear arms 309, a rear wheel 310 is supported so as to be capable of rotating.

At the central portion of the body frame 301, the engine 100 shown in Figure 9 is held. The engine 100 includes the titanium-alloy connecting rod 1 of the present embodiment. A radiator 311 is provided in front of the engine 100. An exhaust pipe 312 is connected to an exhaust port of the engine 100, and a muffler 313 is attached to the rear end of the exhaust pipe 312.

A transmission 315 is linked to the engine 100. Driving sprockets 317 are attached on an output axis 316 of the transmission 315. Via a chain 318, the driving sprockets 317 are linked to rear wheel sprockets 319 of the rear wheel 310. The transmission 315 and the chain 318 function as a transmitting mechanism for transmitting the motive power generated in the engine 100 to the driving wheel.

Although a motorcycle is illustrated as an example of the automotive vehicle according to the present embodiment, it may be a vehicle having three or more wheels. For example, the automotive vehicle may be a four-wheeled automobile. Alternatively, the automotive vehicle may be a vehicle having trackbelts. Without being limited to wheeled vehicles, the present invention is also applicable to marine vessels and aircraft. Moreover, without being limited to transport machines on or in which a human rides, the present invention is also applicable to transport machines that undergo unmanned operation. The present invention is applicable to any machine in which an internal combustion engine including a connecting rod is incorporated.

The present invention is particularly useful in technological fields related to titanium-alloy connecting rods.

It will be appreciated that the term straddle-type vehicle or motor vehicle or automotive vehicle used herein, and as used in the art, is meant to include the following terms also used in the art:
saddled vehicle, saddle-ride type vehicle or motor vehicle, saddle-straddling type vehicle or motor vehicle, and includes: motorcycles and motorbikes as well as motor tricycles and All Terrain Vehicles (ATVs), scooters, mopeds and snowmobiles.

## Claims

1. A production method for a titanium-alloy connecting rod (1), in which a rod portion (33) and a cap portion (34) of a big end (30) are fixed by using a fixing member or bolt (40),
the production method comprising a step of forming a fixing hole or bolt hole (32) for the fixing member or bolt (40) to extend therethrough,
the step of forming the fixing hole or bolt hole (32) comprising:
forming a first hole (61) in the cap portion (34) and the rod portion (33) in a direction from the cap portion (34) toward the rod portion; **characterized in that** said method further comprises the step of forming a second hole (62) in the rod portion (33) in a direction from the rod portion (33) toward the cap portion (34), wherein,
the first hole (61) and the second hole (62) communicate with each other once the first and second holes (61,62) are formed; and
a longitudinal direction (LD2) of a cutting tool (52) used for forming the second hole (62) is inclined with respect to a longitudinal direction (y) of the rod main body (10) of the titanium-alloy connecting rod (1).

2. The production method for a titanium-alloy connecting rod (1) of claim 1, wherein an angle between the longitudinal direction (LD2) of the cutting tool (52) and the longitudinal direction (y) of the rod main body (10) is not less than 2 degrees and not more than 20 degrees.

3. The production method for a titanium-alloy connecting rod (1) of claim 2, wherein the angle between the longitudinal direction (LD2) of the cutting tool (52) and the longitudinal direction (y) of the rod main body (10) is not less than 3 degrees and not more than 10 degrees.

4. The production method for a titanium-alloy connecting rod (1) of any of claims 1 to 3, wherein the titanium alloy is Ti-5Al-1Fe alloy.

## Patentansprüche

1. Procede de production pour une bielle en alliage de titane (1), dans laquelle une partie formant tige (33) et une partie formant coiffe (34) d'une grosse extremite (30) sont fixées en utilisant un element de fixation ou un boulon (40),
le procede de production comprenant une etape de formation d'un orifice de fixation ou d'un orifice de boulon (32) pour que l'élément de fixation ou le boulon (40) se deploie à travers celui-ci,
l'étape de formation de l'orifice de fixation ou de l'orifice de boulon (32) comprenant :
la formation d'un premier orifice (61) dans la partie formant coiffe (34) et la partie formant tige (33) dans une direction partant de la partie formant coiffe (34) en direction de la partie formant tige ; **caractérisé en ce que** ledit procede comprend en outre l'étape consistant à
former un deuxieme orifice (62) dans la partie formant tige (33) dans une direction partant de la partie formant tige (33) en direction de la partie formant coiffe (34), dans lequel
le premier orifice (61) et le deuxieme orifice (62) communiquent l'un avec l'autre une fois que les premier et deuxieme orifices (61, 62) sont formes ; et
une direction longitudinale (LD2) d'un outil de decoupe (52) utilise pour former le deuxieme orifice (62) est inclinée par rapport à une direction longitudinale (y) du corps principal de tige (10) de la bielle en alliage de titane (1).

2. Procede de production pour une bielle en alliage de titane (1) selon la revendication 1, dans lequel un angle entre la direction longitudinale (LD2) de l'outil de decoupe (52) et la direction longitudinale (y) du corps principal de tige (10) n'est pas inférieur à 2 degres et n'est pas superieur à 20 degres.

3. Procede de production pour une bielle en alliage de titane (1) selon la revendication 2, dans lequel l'angle entre la direction longitudinale (LD2) de l'outil de decoupe (52) et la direction longitudinale (y) du corps principal de tige (10) n'est pas inférieur à 3 degres et n'est pas superieur à 10 degres.

4. Procede de production pour une bielle en alliage de titane (1) selon l'une quelconque des revendications 1 à 3, dans lequel l'alliage de titane est un alliage de Ti-5Al-1Fe.

## Revendications

1. Procédé de production pour une bielle en alliage de titane (1), dans laquelle une partie formant tige (33) et une partie formant coiffe (34) d'une grosse extrémité (30) sont fixées en utilisant un élément de fixation ou un boulon (40),
le procédé de production comprenant une étape de formation d'un orifice de fixation ou d'un orifice de boulon (32) pour que l'élément de fixation ou le boulon (40) se déploie à travers celui-ci,
l'étape de formation de l'orifice de fixation ou de l'orifice de boulon (32) comprenant :
la formation d'un premier orifice (61) dans la partie formant coiffe (34) et la partie formant tige (33) dans une direction partant de la partie formant coiffe (34) en direction de la partie formant tige ; **caractérisé en ce que** ledit procédé comprend en outre l'étape consistant à
former un deuxième orifice (62) dans la partie formant tige (33) dans une direction partant de la partie formant tige (33) en direction de la partie formant coiffe (34), dans lequel
le premier orifice (61) et le deuxième orifice (62) communiquent l'un avec l'autre une fois que les premier et deuxième orifices (61, 62) sont formés ; et
une direction longitudinale (LD2) d'un outil de découpe (52) utilisé pour former le deuxième orifice (62) est inclinée par rapport à une direction longitudinale (y) du corps principal de tige (10) de la bielle en alliage de titane (1).

2. Procédé de production pour une bielle en alliage de titane (1) selon la revendication 1, dans lequel un angle entre la direction longitudinale (LD2) de l'outil de découpe (52) et la direction longitudinale (y) du corps principal de tige (10) n'est pas inférieur à 2 degrés et n'est pas supérieur à 20 degrés.

3. Procédé de production pour une bielle en alliage de titane (1) selon la revendication 2, dans lequel l'angle entre la direction longitudinale (LD2) de l'outil de découpe (52) et la direction longitudinale (y) du corps principal de tige (10) n'est pas inférieur à 3 degrés et n'est pas supérieur à 10 degrés.

4. Procédé de production pour une bielle en alliage de titane (1) selon l'une quelconque des revendications 1 à 3, dans lequel l'alliage de titane est un alliage de Ti-5Al-lFe.
